# EUROPEAN PATENT APPLICATION

(11) **EP 4 744 480 A1**
(43) Date of publication of application: **20.05.2026**
(21) Application number: 25216105.4
(22) Date of filing: 15.11.2025
(51) Int. Cl.: A01K 45/00, B60H 1/00, B60P 3/04

(54) **COOLING UNIT AND METHOD FOR COOLING A LOADING SPACE OF A VEHICLE LOADED WITH LIVING ANIMALS**

(30) Priority: 15.11.2024 NL 2039091
(71) Applicant: Carrosseriebouw Van Ravenhorst B.V., 3771 MB Barneveld (NL)
(72) Inventor: VAN RAVENHORST, Dirk, 3771 MB BARNEVELD (NL)
(74) Representative: de Hoog, Johannes Hendrik

(57) **Abstract**

A stand-alone cooling unit (100), arranged for cooling living animals in a loading space of a vehicle (10), comprises: a housing (120) accommodating an electric power generator (110); an air-cooling system (130) powered by the electric power generator and configured to generate a flow of cooled air; and a control unit (140) configured to control the cooling capacity in dependence of at least one sensor signal.

The housing is equipped with a support structure (123) designed to facilitate the lifting of the cooling unit with a lifting device, and to allow the loading and unloading of the cooling unit from either a left side or a right side of the loading space with the lifting device. The housing is also equipped with air outlets (124) configured to provide a flow of cooled air along the living animals loaded in the loading space.

## Description

### TECHNICAL FIELD

The subject disclosure relates to a cooling unit for cooling a loading space of a vehicle loaded with living animals. The subject disclosure further relates to a method for cooling a loading space of a vehicle loaded with living animals.

### BACKGROUND ART

For many years, poultry was transported in an open loading space of a trucks and/or trailer. This technique permits a great deal of air circulation for cooling the poultry during transport. However, it is no longer widely accepted because of the direct exposure of poultry to the elements and because of damage to the poultry caused by high velocity airflow.

To overcome the problem direct exposure trucks for transport of broilers are known wherein the sidewalls of the loading space are exchangeable rolling or sliding curtains. The summer version of the curtains comprises mesh fabric such that environmental air can flow in to the loading space. The winter version of the rolling curtains comprises a fabric preventing the environmental air to flow in to the loading space. There is a trend that people do not want to see how living animals are transported in vehicles. This makes the use of side wall with mesh fabric a less interesting solution to improve the climate in the loading space in summer conditions.

US2013/0074777A1 discloses a trailer for transporting living poultry is provided and includes an enclosure. The side walls of the enclosure are made of fabric so that the living poultry may be loaded and unloaded from the sides of the trailer. A main air supply duct extends a substantial portion of the length of the top of the enclosure and receives conditioned air from an apparatus for generating conditioned air. A plurality of spaced apart vertical side ducts is connected to the main air supply duct and provide support for the top of the enclosure. A plurality of spaced apart floor ducts is connected to the vertical side ducts.

EP3789243A1 discloses a vehicle for transporting living animals. The vehicle comprises a loading space and an air flow generator for generating an air flow of fresh air to be supplied to the loading space. The sidewalls being movable such that the living animals may be loaded and unloaded from a side of the vehicle. The sidewalls comprise an air supply duct configured to be coupled to and to receive fresh air from the air flow generator. The air supply duct extends a substantial portion of the length of the loading space and the air supply duct comprises a plurality of openings for distributing the fresh air over the length of the loading space.

US20180319245A1 discloses an autonomous cooling unit for a vehicle including a housing containing a compressor, a condenser and an evaporator to cool ambient air. A power module is located which the housing and configured to supply electrical power to each of the compressor, the condenser, and the evaporator. The power module may include one or more batteries of one or more fuel cells.

Trucks with a curtain-sided loading compartment without cooling system can be used for animal transportation during a large part of the year, as long as the outside temperature stays below a certain threshold. However, when the outside temperature rises above that threshold, trucks without cooling can no longer be used for transporting animals.

Trucks with a fixed cooling system can be used year-round for animal transport. However, the cooling system takes up space, increases the purchase cost of the truck, and the additional weight of the cooling system results in higher fuel consumption compared to the same truck without cooling system. Additionally, for a large part of the year, the cooling system does not have to be used to transport the animals according to current EU rules on the protection of animals during transport.

### SUMMARY OF INVENTION

It is an object of the subject technology to provide a dedicated cooling unit and method for cooling a loading space of a vehicle loaded with living animals, which overcomes at least one of the aforementioned disadvantages. The present technology enables trucks without a cooling system to be used for transporting living animals when the outside temperature exceeds a temperature specified by EU regulations.

According to an aspect of the subject technology, this object is achieved by a cooling unit having the features of claim 1. Advantageous embodiments and further ways of carrying out the present technology may be attained by the measures mentioned in the dependent claims.

A cooling unit for cooling a loading space of a vehicle loaded with living animals according to the subject technology comprises an electric power generator; an air-cooling system powered by the electric power generator and configured to generate a flow of cooled air; and, a control unit configured to control the cooling capacity in dependence of at least one sensor signal. The cooling unit further comprises a housing that encloses the electric power generator, air-cooling system and control unit. The housing is equipped with a support structure configured to facilitate lifting of the cooling unit with a lifting device, and to allow the loading and unloading of the cooling unit from either, the left or the right side of the loading space with the lifting device; and wherein the housing is equipped with air outlets configured to provide a flow of cooled air along the living animals loaded in the loading space.

The concept of the present technology anticipates on the future reduction of the maximum allowable temperature in the loading space, beyond which animals may no longer be transported. As a result, transport companies using trucks without a cooling system will be able to make fewer trips, leading to higher transport costs per kilometre. Another disadvantage is that when broiler chickens are transported later due to hot weather, they continue to grow in the meantime. This leads to a decrease in the number of broiler chickens that can be transported in the loading space. As a result, the costs per broiler chicken increase, and eventually driving up meat prices for consumers. To address these issues, a self-operating cooling unit has been developed. The cooling unit is placed at the front side of the loading space during hot weather, in the location where a row of containers with animals would otherwise be located. Although fewer animals can be transported per trip, this disadvantage does not outweigh the financial drawbacks of not transporting broiler chickens at the right time.

In an embodiment, the electric power generator (110) comprises a combustion engine (111) an alternator (112) driven by the combustion engine and a fuel tank.

Compared to power systems relying on rechargeable batteries, this arrangement provides a substantially longer continuous operating time without the need for recharging, which is particularly beneficial during long-distance or time-critical transport of living animals.

A further advantage of using a fuel-powered generator is the higher energy density of liquid fuels compared to electrochemical energy storage systems. For a given weight or volume, the amount of usable energy stored in conventional fuels such as diesel is significantly higher than that of common battery technologies. As a result, the total weight and volume of the cooling unit can be kept relatively low while still providing the electrical power capacity required for prolonged autonomous operation. Moreover, refuelling of the fuel tank can be performed within a few minutes, enabling rapid restoration of full operating capacity. The use of an integrated fuel-powered generator therefore ensures minimal downtime and high operational availability of the cooling unit.

Integrating the combustion engine, alternator, and fuel tank within the housing thus allows the cooling unit to function as a compact, self-contained cooling system that combines high energy availability with easy handling and installation on a vehicle that temporarily requires cooling of the loading space for the transport of living animals.

In an embodiment, the support structure at the underside of the housing provides spaces that allow forks of a forklift to be inserted from a left or right side of the housing. This makes it possible to lift the cooling unit with a forklift and place it in the loading space from the side.

In an embodiment, the cooling unit comprises a coupling structure on the left and right side of the housing, wherein the coupling structure is configured to detachably fasten a side of a tarpaulin to the housing of the cooling unit. This allows the tarpaulin to fit properly against the cooling unit, thereby minimizing the inflow of outside air and preventing the tarpaulin from flapping on that side. In an embodiment the coupling structure is an elongated hook profile.

In an embodiment, the cooling unit comprises multiple outlets for cooled air, configured to generate a flow of cooled air at multiple levels above the loading space floor, enabling delivery of cooled air along living animals loaded at corresponding multiple levels within the loading space. This enables a targeted airflow to be generated over each layer of living animals, helping to reduce the temperature difference between the various layers of living animals.

In an alternative embodiment, the cooling unit further comprises a left cooled air outlet structure and right cooled air outlet structure, both configured to be connected to an air inlet structure for one or more air ducts integrated into a tarpaulin. This type of tarpaulin makes it possible to supply cool air along the entire length of the loading area.

In an embodiment, the cooling unit comprises one or more alignment structures at its underside. By utilizing one or more alignment structures that correspond to the alignment structure of the containers to be loaded, the cooling unit can be quickly positioned in the correct place on a loading floor equipped with alignment structures configured to engage with the alignment structure of the containers. In an advantageous embodiment the one or more alignment structures are recesses in the underside.

According to another aspect of the subject technology, the object is achieved by a method for cooling a loading space of a vehicle with a roof and loaded with living animals having the features of claim 9. Advantageous embodiments and further ways of carrying out the present technology may be attained by the measures mentioned in the dependent claims.

The method for cooling a loading space of a vehicle with a roof and loaded with living animals according to the subject technology comprises the following actions:
- providing a cooling unit according to the embodiments described above;
- providing a vehicle with a loading space having a roof above the loading space;
- lifting the cooling unit with a lifting device;
- loading the cooling unit in the front side of the loading space via a left or a right side of the vehicle;
- loading the remaining loading space with containers holding living animals, thereby filling the loading space with the living animals across a number of levels;
- closing the left and right side of the loading space with a left and right tarpaulin;
- activating the cooling unit to generate a flow of cooled air along the living animals on each of the number of levels;
- controlling by a control unit the cooling capacity of the cooling unit in dependence of at least one sensor signal;
- transporting the living animals in the vehicle to another location.

This method optimizes resource use by allowing the entire loading floor of a vehicle without an expensive and heavy cooling system to be utilized for transporting living animals when the ambient temperature remains below a certain threshold. If the temperature rises above this threshold, the same vehicle can still be used by allocating a portion of the loading floor to the cooling unit describes before.

In an embodiment, the support structure at the underside of the housing provides spaces that allow forks of a forklift to be inserted from a left or right side of the housing. The lifting the cooling unit with a lifting device action comprises the actions:
- positioning the forks of a forklift in the elongated spaces; and,
- lifting the cooling unit with the forklift.

This allows the same lifting vehicle to place both the animal containers and the cooling unit onto the loading floor and remove them as needed.

In an embodiment, the cooling unit further comprises a coupling structure on the left and right side of the housing, wherein the coupling structure is configured to detachably fasten an edge of a tarpaulin to the housing of the cooling unit. The method further comprises the action:
- fasten an edge of the tarpaulin at the left and right side of the loading space to corresponding coupling structure on the left and right side of the housing.

In an advantageous embodiment, the coupling structure is an elongated hook profile; wherein the fasten action comprises:
- hook an elongated profile at an edge of the tarpaulin to corresponding elongated hook profile on the housing of the cooling unit.

These setups allow a tarpaulin to be easily attached to the housing of the cooling unit, preventing warm air from entering the loading space and preventing cooled air generated by the cooling unit escaping directly out of the loading space reducing the flow of cooled air along the living animals.

In an embodiment, the cooling unit further comprises multiple air outlets for cooled air, configured to generate a flow of cooled air at multiple levels above the loading space floor, enabling delivery of cooled air along living animals loaded at corresponding multiple levels within the loading space. The method comprises the action: generating a flow of cooled air through each of the multiple air outlets.

This embodiment ensures that the cooled air is distributed throughout the layers in the loading space in such a way that all layers are cooled equally, wherein the air flows from the front to the rear of the loading space between layers.

In an alternative embodiment, the cooling unit further comprises a left cooled air outlet structure and right cooled air outlet structure, both configured to be connected to an air inlet structure for one or more air ducts integrated into a tarpaulin. The method further comprising: connecting the air inlet structure of the one or more air channels of a tarpaulin on the left side of the loading space to the left cooled air outlet structure, and connecting the air inlet structure of one or more air channels of a tarpaulin at the right side of the loading space to the right cooled air outlet structure.

This embodiment allows for the use of tarpaulins as described in EP3789243A1. The cooled air is distributed across the loading space along the entire length of the loading floor and is discharged through the roof. This setup provides more uniform cooling of the animals in the loading space and reduces the airflow speed around the animals.

In a further embodiment, the method further comprises the action: replacing left and right tarpaulins, which extend along the full length of the loading space with a left and a right tarpaulin each containing one or more integrated air ducts, and configured to respectively close off the left and right sides of the loading space between the cooling unit and the rear of the loading space.

In an embodiment, the cooling unit comprises one or more alignment structures at its underside, wherein loading the cooling unit at the front side of the loading space via a left or a right side of the vehicle further comprises the action: aligning the cooling unit on the loading space floor by causing the one or more alignment structures to coincide with one or more complementary alignment structures on the loading space floor. In an advantageous embodiment, the one or more alignment structures are recesses in the underside of the cooling unit; wherein the aligning the cooling unit on the loading space floor comprises the action: positioning one or more projections on the loading space floor into one or more corresponding recesses in the underside of the cooling unit.

By utilizing an alignment structure that corresponds with the alignment structure of the containers being loaded, the cooling unit can be quickly positioned in the correct place on the loading floor. Furthermore, this prevents the cooling unit from being placed incorrectly, allowing the remaining loading space to be filled with standard containers without any loss of loading space.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 schematically illustrates a side view of a vehicle for transporting living animals, showing the loading space loaded with a cooling unit and the containers with living animals;
Fig. 2 schematically illustrates a perspective view of a first embodiment of the cooling unit;
Fig. 3 schematically illustrates an end side view of an embodiment of a coupling structure to couple a tarpaulin to the cooling unit;
Fig. 4 schematically shows, in perspective, the arrangement of the various component in the first embodiment of the cooling unit;
Fig. 5 schematically illustrates the airflow of fresh and cooled air through the first embodiment shown in Fig. 4;
Fig. 6 schematically illustrates a perspective view of a cooling unit with a second type of air outlets; and,
Fig. 7 schematically shows, in perspective, an alternative arrangement of the various components of the air-cooling system.

### DESCRIPTION OF EMBODIMENTS

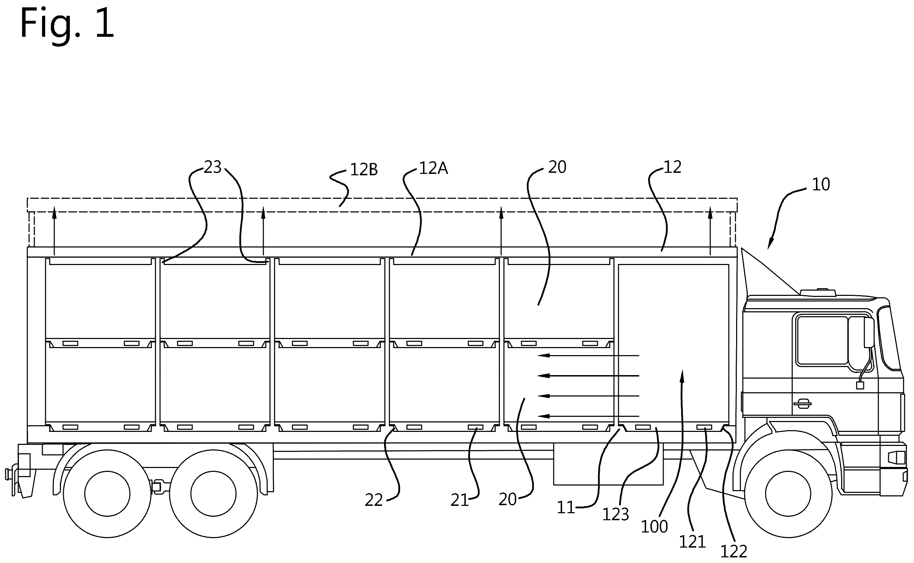

Fig. 1 schematically illustrates a side view of a vehicle 10 for transporting living animals, showing the loading space loaded with a cooling unit and the containers with living animals. The vehicle 10 is a truck-equipped with sliding tarpaulins and a liftable roof 12. The sliding tarpaulins are not shown in Fig. 1. Reference number 12A refers to the liftable roof in the lowered position, and reference number 12B refers to the liftable roof in the raised position. The raised position facilitates loading the loading space with containers up to the roof using a forklift.

The truck has a fixed loading space in which six stacks of containers 20 for transporting broiler chickens can be placed side by side from front to rear. In this figure, the front stack of containers has been replaced by a cooling unit 100 according to the invention.

The underside of the containers 20 comprises spaces 21 that allow forks of a forklift to take up the container, lift the container up, and to load the container in the loading space. Preferably, the spaces 21 are elongated spaces that allow forks of a forklift to be inserted from a left or right side of the housing 120. The underside of the containers 20 further comprises recesses 22 to align the containers 20 with protrusions 11 on the floor of the loading space. The recesses preferably have an alignment structure that is complementary to the protrusions 11, forming the alignment structure for the containers with living animals.

The cooling unit 100 is a stand-alone system. A stand-alone system is an independent device or setup that operates without needing to connect to or rely on external systems, networks, or components. It contains all necessary elements and energy sources within itself to perform its intended functions autonomously.

The cooling unit 100 comprises an electric power generator, an air-cooling system powered by the electric power generator and configured to generate a flow of cooled air, and a control unit configured to control the cooling capacity in dependence of at least one sensor signal.

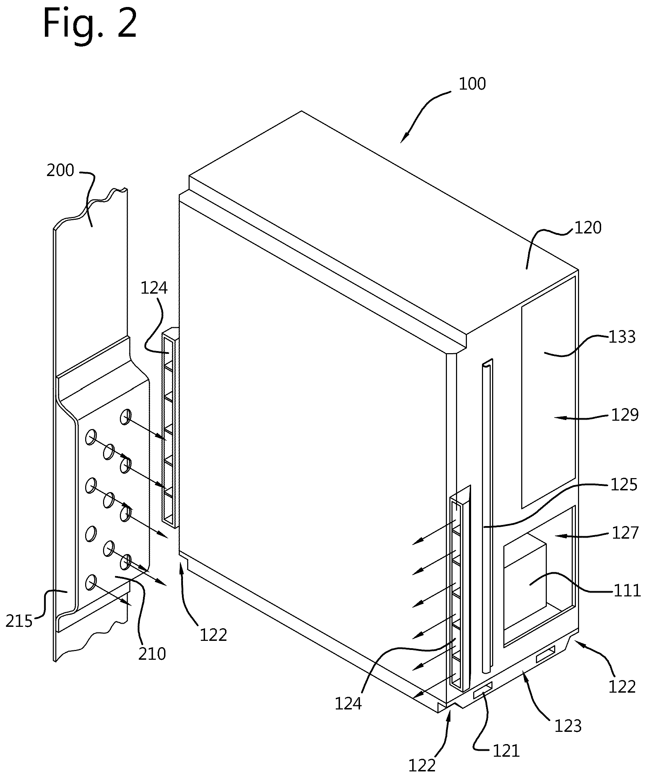

Fig. 2 schematically shows a perspective side view of a first embodiment of the cooling unit 100 for cooling living animals in a loading space of a vehicle with a roof and tarpaulins. The cooling unit comprises a housing 120 that encloses both the electric power generator, air-cooling system and control unit. Fig. 2 shows the side of the housing 120 facing the loading space along with a side featuring outlet openings 127, 129 for venting heat from the cooling unit. On both the left and right sides of the housing 120, there are cooled air outlet structures 124 for a flow of cooled air. Both cooled air outlet structures are configured to be connected to an air inlet structure of one or more air ducts 215, which are integrated into a tarpaulin 200. Each air duct 215 contains a plurality of holes to distribute cooled air along the length of the loading space to provide a flow of cooled air along the living animals loaded in the loading space. The air ducts 215 are formed by attaching a fabric 210 with multiple holes to the tarpaulin 200. EP3789243A1 discloses a number of embodiments of tarpaulins containing an air duct designed to distribute air across the loading space along the entire length of the loading floor.

Outlet opening 127 is provided to vent heat generated by the combustion engine 111 of electric power generator. Outlet opening 129 is provided to release the heat removed from the condenser 133 of the air-cooling system in the housing 120.

The housing is equipped with a support structure 123 designed to facilitate the lifting of the cooling unit 100 with a lifting device, and to allow the loading and unloading of the cooling unit from either a left side or a right side of the loading space with the lifting device.

The support structure 123 at the underside of the housing 120 provides spaces 121 that allow forks of a forklift to be inserted from a left or right side of the housing. In an alternative embodiment, the support structure comprises one or lifting lugs at the top of the housing 120.

The underside of the housing 120 further comprises one or more alignment structures 122. In Fig. 2 the one or more alignment structures are shown as recesses at the corners of the underside. When the cooling unit is placed on the floor of the loading space, the protrusions 11 on the floor of the loading space, which facilitate the proper positioning of containers 20, slide into the recesses 122, aligning the cooling system on the floor of the loading space.

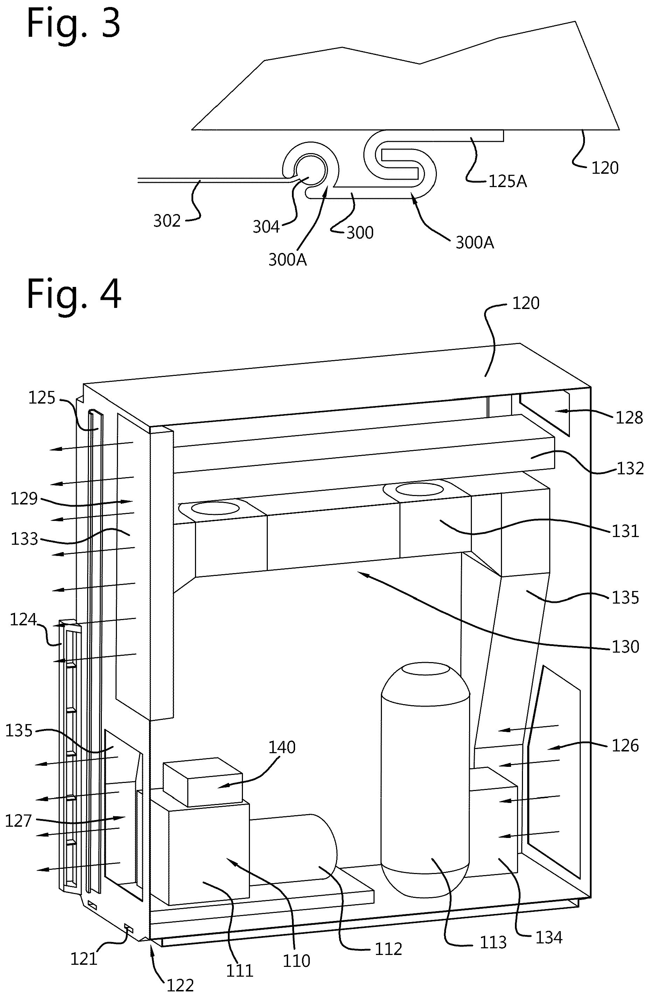

On the left and right sides of the housing 120, a coupling structure 125 is provided, configured to detachably fasten a side of a tarpaulin 200 to the housing 120 of the cooling unit 100. Fig. 3 schematically shows a cross-sectional view of an embodiment of a coupling structure to couple a tarpaulin to the cooling unit. The coupling structure is an elongated hook profile125A. A side edge of tarpaulin is detachably fastened to the elongated hook profile 125A by means of a tarpaulin hook profile 300, that is secured to a side edge of the tarpaulin 302. The tarpaulin hook profile 300 comprises a hook portion 300A and a slot portion 300B. The tarpaulin 302 comprises a thickened edge that is held in place in the trench shaped slot formed by the slot portion 300B. The hook portion 300A can easily be hooked onto the elongate hook profile 125A attached to housing 120 with a simple motion.

Fig. 4 schematically shows, in perspective, the arrangement of the various component in the first embodiment of the cooling unit. The housing 120 contains a complete stand-alone power generator 110 with a fuel tank 113, a complete cooling system 130, and a control unit 140. Some components of the power generator are shown schematically, including the fuel engine 111, the alternator 112 driven by the fuel engine, and the fuel tank 113.

The fuel tank (113) is configured to store fuel for the combustion engine (111) and to supply the combustion engine with fuel during operation of the cooling unit. The capacity of the fuel tank is selected such that the cooling unit can operate autonomously for an extended period, for example for the duration of a typical animal transport journey, without requiring refueling. By integrating the fuel tank within the housing (120), the cooling unit can be handled as a self-contained and transportable system, eliminating the need for external fuel connections and enhancing operational safety and convenience. Some components of the cooling system 130 are also shown schematically, including the fan 131 for generating a flow of cooled air, an evaporator 132, a condenser 133, a compressor 134, and the air ducts between the fan and the air outlets 124 for the flow of cooled air. The power generator 110 includes all component necessary to start the power generator, keep it running and to generate a stable electrical output. The cooling system 130 included all component necessary to generate a flow of cooled air suitable to cool the living animals in the loading space in dependence of one or more control signals generated by the control unit 140. The control unit 140 generates control signal for controlling the power generator and cooling system in response to signals from one or more sensors. The functions of the mentioned components of both the power generator and the cooling unit, as well as their interconnections, are considered common general knowledge and therefore are not described in further detail.

Sensor signals that can be used are not limited to: the temperature of the incoming outside air, the temperature of the cooled air entering the loading space, the temperature inside the loading space, and the temperature of the air exiting the loading space.

The power generator preferably has a capacity enabling the cooling system to cool incoming ambient air sufficiently to maintain a loading space temperature up to 10 degrees lower than the outside temperature. The cooling capacity is related to the heat output of the number of animals in the loading space. For this purpose, a power generator with a capacity of approximately 35 kVA may be required. The cooling system demands a cooling power capacity up to 20 kW. Furthermore, the fans are preferably adjustable to generate an airflow ranging from 9,000 to 22,000 m³ per hour.

The housing 120 has an air intake side and an opposite air exhaust side. At the bottom of the air intake side, there is a first air inlet opening 126 for cooling the area housing the compressor 134, the fuel engine 111, and the alternator 112. These components need to be cooled when they are active. The condenser 133 is also cooled by the air entering the housing through the first air intake opening 126. The airflow through the first air intake opening is generated by a fan that produces an airflow through the radiator of the fuel engine 111 and by one or more fans that create an airflow through the condenser 133 of the cooling system 130. The airflow heated by the radiator exits the housing 120 via air outlet 127, and the airflow heated by the condenser exits the housing via air outlet 129. The parallel arrows indicate the direction of the airflows through the respective openings, flowing from one side of the housing, past the various components in the space of the housing, to the other side of the housing.

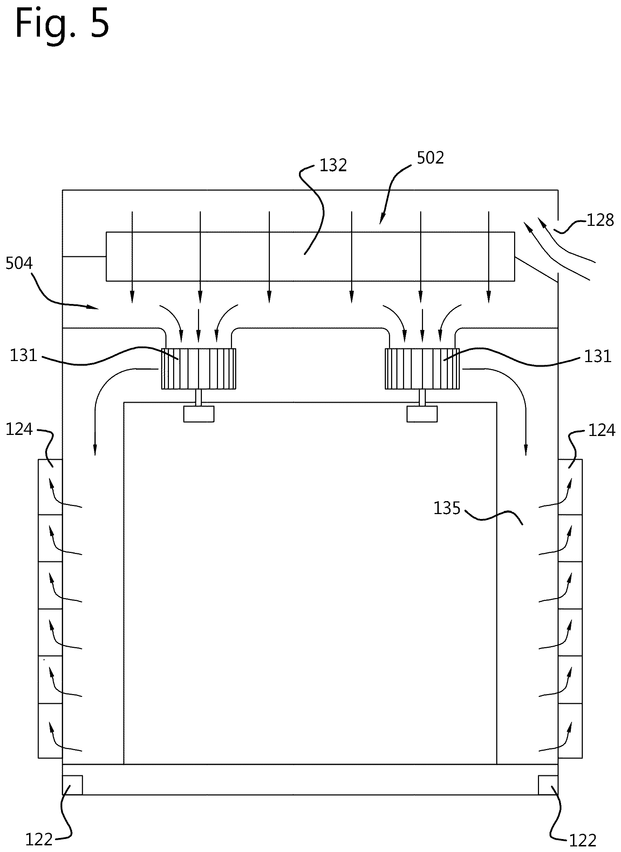

A second air inlet opening 128 is located above the first inlet opening 126. The air flowing through this opening is drawn through the evaporator 132 using one or more fans 131 and is than directed through the air ducts 135 to the air outlets 124 on both side of the cooling unit. The one or more fans 131 are preferable centrifugal fans. Fig. 5 schematically illustrates the intake of fresh air and the airflow through cooling system 130 shown in Fig. 4 to the air outlets 124 to generate a flow of cooled air.

It might be clear that the tarpaulins forming the side walls of the loading space and attached to the housing 120 must not cover the first and second air inlet openings 126, 128 at the air intake side, nor the air outlet openings 127, 129 at the air exhaust side.

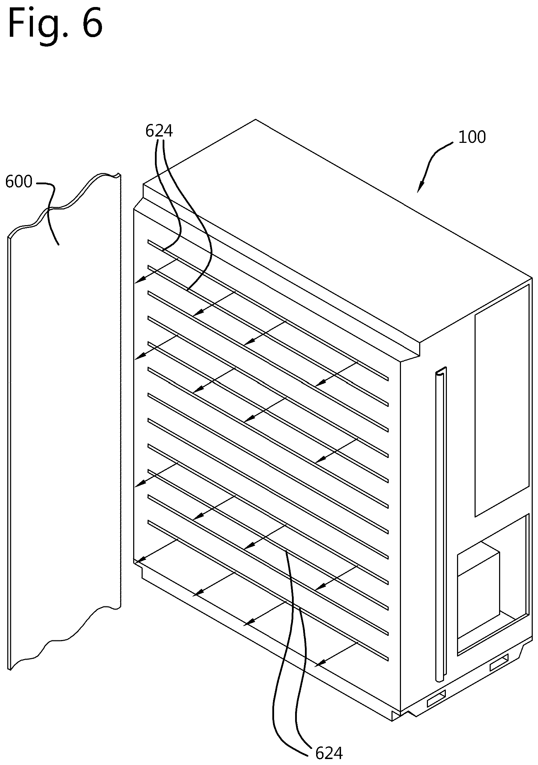

Fig. 6 schematically shows a perspective view of an embodiment of the cooling system, equipped with a second type of air outlets 624. The side of the cooling system facing the loading space contains multiple horizontally oriented air outlets 624 for cooled air. These air outlets are designed to generate a flow of cooled air at multiple levels above the floor of the loading space, allowing the cooled air to be distributed across the width of the loading space along the living animals loaded at corresponding levels. This embodiment is used in combination with normal tarpaulins 600 without integrated air ducts. The cooled air from each air outlet 624 flows from the cooling system 100 towards the back of the loading space, along the animals at each corresponding level, and underneath the containers above that layer of animals, and exits the loading space at the rear of the vehicle.

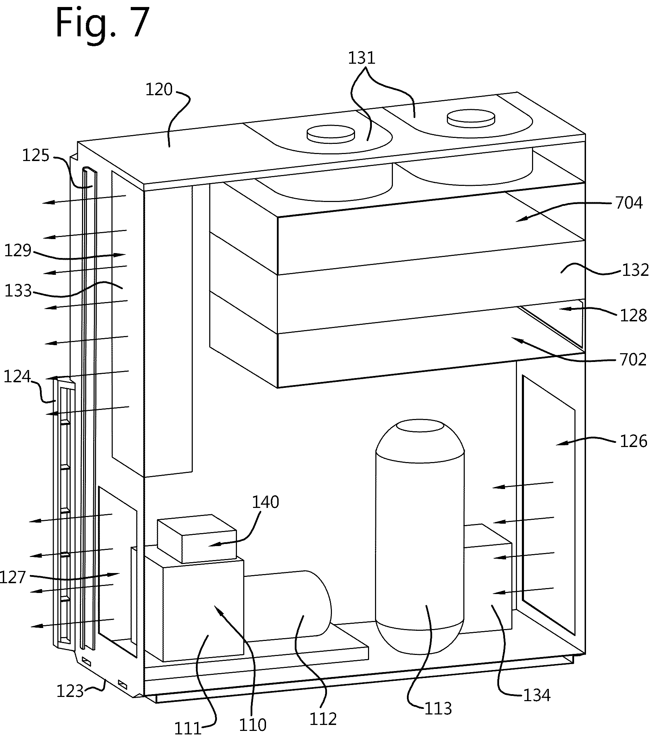

Fig. 7 schematically shows, in perspective, an alternative arrangement of the various components of the air-cooling system within the housing 120. This embodiment differs from the arrangement in Fig. 4 in that the fans 131 are positioned above the evaporator 132. An air supply chamber 702 forming a duct between the air intake opening 128 is located below the evaporator 132. An air chamber 704 is situated above the evaporator 132, between the fans 131 and the evaporator. This air chamber 704 minimizes differences in air velocity as the air passes through the evaporator 132.

After passing through the fans, the cooled air is directed into a hollow double wall, which forms the air duct between the fans and the air outlet openings 124. Advantages of this embodiment are that it simplifies fan maintenance and makes the air duct easier to manufacture.

The cooling unit described above provides an alternative method for cooling a loading space of a vehicle with a roof and loaded with living animals. The method comprising the following actions:
- providing the cooling unit
- providing a vehicle with a loading space having a roof above the loading space;
- lifting the cooling unit with a lifting device;
- loading the cooling unit in the front side of the loading space via a left or a right side of the vehicle;
- loading the remaining loading space with containers holding living animals, thereby filling the loading space with the living animals across a number of levels;
- closing the left and right side of the loading space with a corresponding left and right tarpaulin;
- activating the cooling unit to generate a flow of cooled air along the living animals in the loading space;
- controlling by a control unit the cooling capacity of the cooling unit in dependence of at least one sensor signal;
- transporting the living animals in the vehicle to another location.

In an advantageous embodiment, the lifting the cooling unit with a lifting device action comprises the actions:
- positioning the forks of a forklift in the elongated spaces; and,
- lifting the cooling unit with the forklift.

The method may further comprise the action:
- fasten an edge of the tarpaulin at the left and right side of the loading space to corresponding coupling structure on the left and right side of the housing.

The fasten action may comprise the action:
- hook an elongated profile at an edge of the tarpaulin to corresponding elongated hook profile on the housing of the cooling unit.

If the cooling unit comprises multiple air outlets as disclosed in Fig. 6, the method comprises the action: generating a flow of cooled air through each of the multiple air outlets.

If the cooling unit comprises air outlets as disclosed in Fig. 2, the method further comprises the action: connecting the air inlet structure of the one or more air channels of a tarpaulin on the left side of the loading space to the left cooled air outlet structure, and connecting the air inlet structure of one or more air channels of a tarpaulin at the right side of the loading space to the right cooled air outlet structure. Optionally, the method may comprise the action: replacing left and right tarpaulins, which extend along the full length of the loading space with a left and a right tarpaulin each containing one or more integrated air ducts, and configured to respectively close off the left and right sides of the loading space between the cooling unit and the rear of the loading space.

The method may further comprise the action: aligning the cooling unit on the loading space floor by causing the one or more alignment structures to coincide with one or more complementary alignment structures on the loading space floor.

It should be noted that the cooling unit described above can also be used in trailers with a cargo compartment having curtain walls and, optionally, a liftable roof, which are not equipped with a build-in cooling system. The stand-alone cooling unit allows these trailers to still be used when the ambient temperature exceeds a threshold that prohibits the transport of living animals in vehicles without a cooling system. In this case, only one portion of the floor area, intended for loading containers with living animals, will be occupied by the cooling unit and the remaining floor area is available for loading containers with living animals. For example, if 11 stacks of containers can be placed side by side on the trailer, then on warm days when the temperature exceeds a set threshold prohibiting the trailer's use for transporting living animals, less than 10% of the loading space needs to be allocated for the cooling unit. This enables the trailer to still be used for transporting living animals on those hot days.

While the invention has been described in terms of several embodiments, it is contemplated that alternatives, modifications, permutations and equivalents thereof will become apparent to those skilled in the art upon reading the specification and upon study of the drawings. The invention is not limited to the illustrated embodiments. Changes can be made without departing from the scope of the appended claims.

## Claims

1. A cooling unit (100) for cooling living animals in a loading space of a vehicle having a roof comprising:
an electric power generator (110);
an air-cooling system (130) powered by the electric power generator and
configured to generate a flow of cooled air; and,
a control unit (140) configured to control the cooling capacity in dependence of at least one sensor signal;
**characterized in that**,
the cooling unit further comprises a housing (120) that encloses both the electric power generator, air-cooling system and control unit;
wherein the housing is equipped with a support structure (123) configured to facilitate lifting of the cooling unit with a lifting device, and to allow the loading and unloading of the cooling unit from either the left side or the right side of the loading space with the lifting device; and
wherein the housing is equipped with air outlets (124) configured to provide a flow of cooled air along the living animals loaded in the loading space.

2. The cooling unit according to claim 1,
wherein the electric power generator (110) comprises a combustion engine (111) an alternator (112) driven by the combustion engine and a fuel tank (113).

3. The cooling unit according to any of the claims 1 or 2, further comprising a coupling structure (125) on the left and right side of the housing, wherein the coupling structure is configured to detachably fasten a side of a tarpaulin to the housing of the cooling unit.

4. The cooling unit according to claim 3, wherein the coupling structure is an elongated hook profile(125A).

5. The cooling unit according to any of the claims 1 - 4, further comprising multiple air outlets for cooled air, configured to generate a flow of cooled air at multiple levels above the loading space floor, enabling delivery of cooled air along living animals loaded at corresponding multiple levels within the loading space.

6. The cooling unit according to any of the claims 1 - 4, further comprising a left cooled air outlet structure and right cooled air outlet structure, both configured to be connected to an air inlet structure for one or more air ducts integrated into a tarpaulin.

7. The cooling unit according to any of the claims 1 - 6, further comprising one or more alignment structures at its underside,
preferably wherein the one or more alignment structures are recesses in the underside.

8. Method for cooling a loading space of a vehicle with a roof and loaded with living animals, the method comprising the following actions:
- providing a cooling unit comprising:
an electric power generator;
an air-cooling system powered by the electric power generator and configured to generate a flow of cooled air;
a control unit configured to control the cooling capacity in dependence of at least one sensor signal; and,
a housing that encloses the electric power generator, air-cooling system and
control unit; wherein the housing is equipped with a support structure designed to facilitate the lifting of the cooling unit with a lifting device, and to allow the loading and unloading of the cooling unit from either a left sideor a right side of the loading space with the lifting device; and wherein the housing is equipped with air outlets configured to provide a flow of cooled air along the living animals loaded in the loading space;
- providing a vehicle with a loading space having a roof above the loading space;
- lifting the cooling unit with a lifting device;
- loading the cooling unit in the front side of the loading space via a left or a right side of the vehicle;
- loading the remaining loading space with containers holding living animals, thereby filling the loading space with the living animals across a number of levels;
- closing the left and right side of the loading space with a left and right tarpaulin;
- activating the cooling unit to generate a flow of cooled air along the living animals in the loading space;
- controlling by a control unit the cooling capacity of the cooling unit in dependence of at least one sensor signal;
- transporting the living animals in the vehicle to another location.

9. The method according to claim 9, wherein the electric power generator (110) comprises a combustion engine (111) an alternator (112) driven by the combustion engine and a fuel tank.

10. The method according to any of the claims 8 - 9, wherein the cooling unit further comprises a coupling structure on the left and right side of the housing, wherein the coupling structure is configured to detachably fasten an edge of a tarpaulin to the housing of the cooling unit;
the method further comprises the action:
- fasten an edge of the tarpaulin at the left and right side of the loading space to corresponding coupling structure on the left and right side of the housing.

11. The method according to claim 10, wherein the coupling structure is an elongated hook profile; wherein the fasten action comprises:
- hook an elongated profile at an edge of the tarpaulin to corresponding elongated hook profile on the housing of the cooling unit.

12. The method according to any of the claims 8 - 11, wherein the cooling unit further comprises multiple air outlets for cooled air, configured to generate a flow of cooled air at multiple levels above the loading space floor, enabling delivery of cooled air along living animals loaded at corresponding multiple levels within the loading space; wherein the method comprises:
generating a flow of cooled air through each of the multiple air outlets.

13. The method according to any of the claims 8 - 11, wherein the cooling unit further comprises a left cooled air outlet structure and right cooled air outlet structure, both configured to be connected to an air inlet structure for one or more air ducts integrated into a tarpaulin;
the method further comprising: connecting the air inlet structure of the one or more air channels of a tarpaulin on the left side of the loading space to the left cooled air outlet structure, and connecting the air inlet structure of one or more air channels of a tarpaulin at the right side of the loading space to the right cooled air outlet structure.

14. The method according to claim 13, the method further comprising:
replacing left and right tarpaulins, which extend along the full length of the loading space with a left and a right tarpaulin each containing one or more integrated air ducts, and configured to respectively close off the left and right sides of the loading space between the cooling unit and the rear of the loading space.

15. The method according to any of the claims 9 - 15, wherein the cooling unit comprises one or more alignment structures at its underside, wherein loading the cooling unit at the front side of the loading space via a left or a right side of the vehicle further comprises:
aligning the cooling unit on the loading space floor by causing the one or more alignment structures to coincide with one or more complementary alignment structures on the loading space floor, preferably wherein the one or more alignment structures are recesses in the underside of the cooling unit; wherein the aligning the cooling unit on the loading space floor comprises:
positioning one or more projections on the loading space floor into one or more corresponding recesses in the underside of the cooling unit.
